# EUROPEAN PATENT SPECIFICATION

(11) **EP 3 901 753 B1**
(45) Date of publication and mention of the grant of the patent: **23.08.2023**
(21) Application number: 20758543.1
(22) Date of filing: 13.02.2020
(51) Int. Cl.: G06F 1/16, G06F 3/0482, G06F 3/01

(54) **SCREEN CONTROL METHOD, ELECTRONIC DEVICE, AND STORAGE MEDIUM**
BILDSCHIRMSTEUERUNGSVERFAHREN, ELEKTRONISCHE VORRICHTUNG UND SPEICHERMEDIUM
PROCÉDÉ DE COMMANDE D'ÉCRAN, DISPOSITIF ÉLECTRONIQUE ET SUPPORT D'ENREGISTREMENT

(30) Priority: 22.02.2019 CN 201910135444
(43) Date of publication of application: 27.10.2021
(60) Divisional application: 23179474.4
(73) Proprietor: Huawei Technologies Co., Ltd., Longgang District, Shenzhen, Guangdong 518129 (CN)
(72) Inventor: ZHANG, Ziyue, Shenzhen, Guangdong 518129 (CN); XIONG, Liudong, Shenzhen, Guangdong 518129 (CN); DING, Ning, Shenzhen, Guangdong 518129 (CN); ZHANG, Chao, Shenzhen, Guangdong 518129 (CN)
(74) Representative: Maiwald GmbH
(86) International application number: PCT/CN2020/075066
(87) International publication number: WO 2020/168977

(56) References cited:
- EP-A1- 3 249 519
- CN-A- 106 155 615
- CN-A- 107 831 993
- CN-A- 107 943 374
- CN-A- 109 361 816
- CN-A- 109 992 189
- US-A1- 2017 206 049

## Description

This application claims priority to Chinese Patent Application No. 201910135444.9, filed with the China National Intellectual Property Administration on February 22, 2019 and entitled "SCREEN CONTROL METHOD, ELECTRONIC DEVICE, AND STORAGE MEDIUM".

### TECHNICAL FIELD

Embodiments of this application relate to the field of electronic device technologies, and in particular, to a screen control method, an electronic device, and a storage medium.

### BACKGROUND

Currently, a foldable electronic device has appeared in the market. The foldable electronic device usually has an internal screen and an external screen, and the electronic device can fold or unfold the electronic device by using the internal screen.

An existing screen locking button can control only on/off of the internal screen. When the electronic device is in a folded state, in other words, when the internal screen is closed, it is almost meaningless for a user to control on/off of the screen by using the screen locking button. Alternatively, an existing volume button is only used to control a volume display bar on the internal screen. When the electronic device is in the folded state, the volume display bar is displayed only on the internal screen, but cannot be displayed on the external screen, and consequently the user cannot see the volume display bar. Alternatively, an existing screenshot button combination is only used to take a screenshot of the internal screen. When the electronic device is in the folded state, if the user wants to take a screenshot of the external screen, the user obtains a screenshot of the internal screen by pressing the screenshot button combination. In conclusion, an existing screen control method causes many misoperations, deteriorating reliability of the electronic device.

EP 3249519 A1 discloses an electronic device for controlling a plurality of displays can comprise: a first display for displaying a first screen; a second display for displaying a second screen; and a control unit for determining attributes of the first screen and the second screen, for determining whether to display, on a display that does not enter into an idle mode, a screen displayed on a display that enters into the idle mode in correspondence to the entry into the idle mode of either the first display or the second display, and for controlling the first display or the second display such that the first screen or the second screen is displayed thereon. In addition, various other examples are possible. US2017/206049 A1 discloses an electronic device includes a foldable housing. The foldable housing includes a first housing including a first display and an illuminance sensor on a front surface, and a second housing, adjacent to the first housing, including a hole formed through a front surface and a rear surface of the second housing. The front surface of the first housing faces the front surface of the second housing when the second housing is folded in a first direction with respect to the first housing, and a rear surface of the first housing faces the rear surface of the second housing when the second housing is folded in a second direction with respect to the first housing.

### SUMMARY

This application provides a screen control method, an electronic device, and a storage medium. Therefore, a probability of a misoperation can be reduced, thereby improving reliability of the electronic device.

Appended claim 1 defines a screen control method. Appended claim 11 defines an electronic device. Appended claim 21 defines a computer storage medium. The invention and its scope of protection is defined by these independent claims. The following aspects and implementations of the disclosure provide examples of how technical subject matters can be combined one with the other.

According to a first aspect, embodiments of this application provide a screen control method. An electronic device includes a first screen and a second screen. The first screen is a foldable screen, the second screen is an external screen. The electronic device can fold or unfold the electronic device by using the first screen. The method includes: The electronic device detects an operation on a function button, wherein the function button is a mechanical button arranged on a lateral side of the electronic device. The electronic device determines a physical form of the electronic device in response to the detected operation. The electronic device controls the first screen or the second screen based on the operation and the physical form of the electronic device. Therefore, in different physical forms of the electronic device, different screens of the electronic device can be controlled by using the function button. For example, when the electronic device is in a first physical form, the electronic device can control the second screen by using the function button; or when the electronic device is in a second physical form, the electronic device can control the first screen by using the function button. Therefore, a probability of a misoperation can be reduced, thereby improving reliability of the electronic device. In addition, the electronic device controls the screen of the electronic device without adding an additional button. Therefore, costs of the electronic device are reduced. In addition, because a user does not need to memorize complex button settings, user experience can be improved.

In an embodiment of this application, that the electronic device determines a physical form of the electronic device includes: The electronic device obtains an included angle of the first screen at a folding position. The electronic device determines the physical form of the electronic device based on the included angle of the first screen at the folding position. If the included angle of the first screen at the folding position is less than or equal to a preset angle, determining that the physical form of the electronic device is the first physical form. If the included angle of the first screen at the folding position is greater than the preset angle, determining that the physical form of the electronic device is the second physical form. A method for determining the included angle by the electronic device includes: The electronic device determines a normal vector of one screen in the first screen and a normal vector of the other screen in the first screen. The electronic device determines an included angle between the normal vector of one screen in the first screen and the normal vector of the other screen in the first screen. The electronic device calculates a difference between 180 degrees and the included angle between the normal vector of one screen in the first screen and the normal vector of the other screen in the first screen, to obtain the included angle of the first screen at the folding position. The preset angle is 0 degrees.

In another embodiment of this application, that the electronic device determines a physical form of the electronic device includes: The electronic device obtains an operation on a target button on the electronic device. The electronic device determines the physical form of the electronic device based on the operation on the target button on the electronic device. If the operation on the target button on the electronic device is a first operation, determining that the physical form of the electronic device is a first physical form. If the operation on the target button on the electronic device is a second operation, determining that the physical form of the electronic device is a second physical form.

In still another embodiment of this application, that the electronic device determines a physical form of the electronic device includes: The electronic device collects sight line information of a user. The electronic device determines the physical form of the electronic device based on the sight line information of the user. If the electronic device determines a sight line of the user falls on the second screen based on the sight line information of the user, determining that the physical form of the electronic device is a first physical form. If the electronic device determines the sight line of the user falls on the first screen based on the sight line information of the user, determining that the physical form of the electronic device is a second physical form.

According to the technical solutions provided in the foregoing embodiments, the electronic device can accurately determine the physical form of the electronic device.

Optionally, that the electronic device controls the first screen or the second screen based on the operation and the physical form of the electronic device includes: The electronic device responds to the operation, and if the physical form of the electronic device is the first physical form, controls the second screen of the electronic device, or if the physical form of the electronic device is the second physical form, controls the first screen of the electronic device. Therefore, the probability of the misoperation can be reduced, thereby improving the reliability of the electronic device. In addition, the electronic device controls the screen of the electronic device without adding an additional button. Therefore, costs of the electronic device are reduced. In addition, because a user does not need to memorize complex button settings, user experience can be improved.

Optionally, the function button is a screen locking button, a volume button, or a screenshot button combination.

The following provides an electronic device. The electronic device can perform the foregoing screen control method, and effects thereof are not described in detail in the following.

According to a second aspect, an embodiment of this application provides an electronic device. The electronic device includes a first screen and a second screen. The first screen is a foldable screen, the second screen is an external screen. The electronic device further includes a function button and a processor. The processor is configured to: detect an operation on the function button, where the function button is a mechanical button arranged on a lateral side of the electronic device; determine a physical form of the electronic device in response to the detected operation; and control the first screen or the second screen based on the operation and the physical form of the electronic device.

Optionally, the processor is specifically configured to: obtain an included angle of the first screen at a folding position; and determine the physical form of the electronic device based on the included angle of the first screen at the folding position.

Optionally, the processor is specifically configured to: if the included angle of the first screen at the folding position is less than or equal to a preset angle, determine that the physical form of the electronic device is a first physical form; and if the included angle of the first screen at the folding position is greater than the preset angle, determine that the physical form of the electronic device is a second physical form.

Optionally, one gyroscope sensor is configured on each of the first screen and the second screen. The processor is specifically configured to: determine a normal vector of one screen in the first screen by using the gyroscope sensor on the first screen, and determine a normal vector of the other screen in the first screen by using the gyroscope sensor on the first screen; determine an included angle between the normal vector of one screen in the first screen and the normal vector of the other screen in the first screen; and calculate a difference between 180 degrees and the included angle between the normal vector of one screen in the first screen and the normal vector of the other screen in the first screen, to obtain the included angle of the first screen at the folding position.

Optionally, the preset angle is 0 degrees.

Optionally, the electronic device further includes a target button. The processor is specifically configured to: obtain an operation on a target button on the electronic device; and determine the physical form of the electronic device based on the operation on the target button on the electronic device.

Optionally, the processor is specifically configured to: if the operation on the target button on the electronic device is a first operation, determine that the physical form of the electronic device is a first physical form; and if the operation on the target button on the electronic device is a second operation, determine that the physical form of the electronic device is a second physical form.

Optionally, the processor is specifically configured to: collect sight line information of a user; and determine the physical form of the electronic device based on the sight line information of the user.

Optionally, the processor is specifically configured to: if the electronic device determines a sight line of the user falls on the second screen based on the sight line information of the user, determine that the physical form of the electronic device is a first physical form; and if the electronic device determines the sight line of the user falls on the first screen based on the sight line information of the user, determine that the physical form of the electronic device is a second physical form.

Optionally, the processor is specifically configured to: respond to the operation; and if the physical form of the electronic device is the first physical form, control the second screen of the electronic device; or if the physical form of the electronic device is the second physical form, control the first screen of the electronic device.

According to a third aspect, an embodiment of this application provides a computer storage medium. The computer storage medium includes a computer instruction. The computer instruction is used to implement the screen control method according to the first aspect or the optional manners of the first aspect. For an effect thereof, refer to an effect corresponding to the first aspect or the optional manners of the first aspect.

This application provides a screen control method, an electronic device, and a storage medium. Therefore, a probability of a misoperation can be reduced, thereby improving reliability of the electronic device.

Embodiments of this application provide a screen control method, an electronic device, and a storage medium. The electronic device includes a first screen and a second screen. The first screen is a foldable screen. The method includes: The electronic device detects an operation on a function button. The electronic device determines a physical form of the electronic device in response to the detected operation. The electronic device controls the first screen or the second screen based on the operation and the physical form of the electronic device. Therefore, in different physical forms of the electronic device, different screens of the electronic device can be controlled by using the function button. Therefore, a probability of a misoperation can be reduced, thereby improving reliability of the electronic device. In addition, the electronic device controls the screen of the electronic device without adding an additional button. Therefore, costs of the electronic device are reduced. In addition, because a user does not need to memorize complex button settings, user experience can be improved.

### BRIEF DESCRIPTION OF DRAWINGS

FIG. 1 is a schematic structural diagram of an electronic device 101 (for example, a mobile phone);
FIG. 2 and FIG. 3 are schematic diagrams of an electronic device according to an embodiment of this application;
FIG. 4 is a flowchart of a screen control method according to an embodiment of this application, where the method may be performed by the foregoing electronic device;
FIG. 5A to FIG. 5F are schematic diagrams of an electronic device according to an embodiment of this application;
FIG. 6 is a schematic flowchart of a screen control method according to another embodiment of this application;
FIG. 7 is a schematic diagram of an electronic device according to an embodiment of this application;
FIG. 8 is a schematic diagram of a geographic coordinate system established based on a gyroscope sensor according to an embodiment of this application;
FIG. 9 is a flowchart of a screen control method according to still another embodiment of this application;
FIG. 10 is a flowchart of a screen control method according to yet another embodiment of this application; and
FIG. 11 is a schematic diagram of an electronic device according to an embodiment of this application.

### DESCRIPTION OF EMBODIMENTS

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" or "one or more" means one, two, or more. The term "and/or" is used to describe an association relationship between associated objects, and represents that three relationships may exist. For example, A and/or B may represent the following cases: Only A exists, both A and B exist, and only B exists. A and B may be singular or plural. The character "/" usually represents an "or" relationship between the associated objects.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, but mean "one or more but not all of the embodiments", unless otherwise specifically emphasized. The terms "include", "comprise", "have", and variants of the terms all mean "include but are not limited to", unless otherwise specifically emphasized.

As mentioned above, for a foldable electronic device provided in the prior art, a screen locking button can control only on/off of the internal screen. When the electronic device is in a folded state, in other words, when the internal screen is closed, it is almost meaningless for a user to control on/off of a screen by using the screen locking button. Alternatively, a volume button is only used to control a volume display bar on the internal screen. When the electronic device is in the folded state, the volume display bar is displayed only on the internal screen, but cannot be displayed on the external screen, consequently, the user cannot see the volume display bar. Alternatively, a screenshot button combination is only used to take a screenshot of the internal screen. When the electronic device is in the folded state, if the user wants to take a screenshot of the external screen, the user obtains a screenshot of the internal screen by pressing the screenshot button combination. In conclusion, an existing screen control method causes many misoperations, deteriorating reliability of the electronic device.

The existing screen control method causes many misoperations, deteriorating the reliability of the electronic device. To resolve this technical problem, embodiments of this application provide a screen control method, an apparatus, an electronic device, and a storage medium.

The electronic device in the embodiments of this application may be a portable electronic device, such as a mobile phone, a tablet computer, or a wearable electronic device (for example, a smartwatch) with a wireless communication function, that further includes another function, for example, personal digital assistant and/or a music player function. An example embodiment of the portable electronic device includes but is not limited to a portable electronic device using iOS, Android, Microsoft, or another operating system. The portable electronic device may alternatively be another portable electronic device, such as a laptop computer (Laptop). It should be further understood that, in some other embodiments, the electronic device may not be a portable electronic device, but a desktop computer.

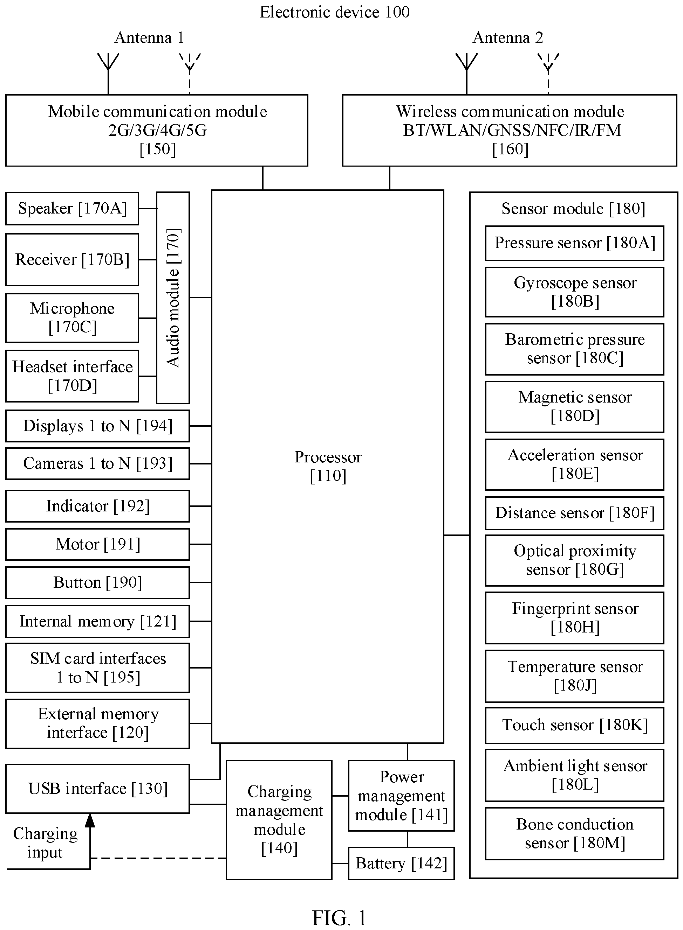

For example, FIG. 1 is a schematic structural diagram of an electronic device 101 (for example, a mobile phone). As shown in FIG. 1, the electronic device 101 may include a processor 110, an external memory interface 120, an internal memory 121, a universal serial bus (Universal Serial Bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset interface 170D, a sensor 180, a button 190, a motor 191, an indicator 192, a camera 193, a display 194, a subscriber identification module (subscriber identification module, SIM) card interface 195, and the like. It may be understood that a structure shown in this embodiment does not constitute a specific limitation on the electronic device 101. In some other embodiments of the embodiments of this application, the electronic device 101 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-network Processing Unit, NPU), and/or the like. Different processing units may be separate devices, or may be integrated into one or more processors. In some embodiments, the electronic device 101 may alternatively include one or more processors 110. The controller may be a nerve center and a command center of the electronic device 101. The controller may generate an operation control signal based on an instruction operation code and a time sequence signal, to complete control of instruction reading and instruction execution. A memory may be further disposed in the processor 110, and is configured to store an instruction and data. In some embodiments, the memory in the processor 110 is a cache memory. The memory may store an instruction or data just used or cyclically used by the processor 110. If the processor 110 needs to use the instruction or the data again, the processor 110 may directly invoke the instruction or the data from the memory. This avoids repeated access and reduces a waiting time of the processor 110, so that efficiency of the electronic device 101 is improved.

In some embodiments, the processor 110 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 101, or may be configured to transmit data between the electronic device 101 and a peripheral device, or may be configured to connect to a headset and play audio by using the headset.

It may be understood that an interface connection relationship between modules shown in this embodiment of the present invention is merely an example for description, and does not constitute a limitation on a structure of the electronic device 101. In some other embodiments of this application, the electronic device 101 may alternatively use an interface connection manner different from that in the foregoing embodiment, or use a combination of a plurality of interface connection manners.

The charging management module 140 is configured to receive charging input from the charger. The charger may be a wireless charger, or may be a wired charger. In some embodiments of wired charging, the charging management module 140 may receive charging input from the wired charger through the USB interface 130. In some embodiments of wireless charging, the charging management module 140 may receive wireless charging input by using a wireless charging coil of the electronic device 101. The charging management module 140 may further supply power to the electronic device 101 by using the power management module 141 while charging the battery 142.

The power management module 141 is configured to connect to the battery 142, the charging management module 140, and the processor 110. The power management module 141 receives an input of the battery 142 and/or an input of the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 101 may be implemented by the antenna 1, the antenna 2, the mobile communication module 150, the wireless communication module 160, the modem processor, the baseband processor, and the like. The antenna 1 and the antenna 2 are configured to: transmit and receive electromagnetic wave signals. Each antenna in the electronic device 101 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that is used for the electronic device 101 and that includes 2G, 3G, 4G, 5G and the like. The mobile communication module 150 may include at least one filter, a switch, a power amplifier, a low noise amplifier, and the like. The mobile communication module 150 may receive an electromagnetic wave by using the antenna 1, perform processing such as filtering and amplification on the received electromagnetic wave, and transfer a processed electromagnetic wave to the modem processor for demodulation. The mobile communication module 150 may further amplify a signal modulated by the modem processor, and convert the signal into an electromagnetic wave for radiation by using the antenna 1. In some embodiments, at least some function modules of the mobile communication module 150 may be disposed in the processor 110. In some embodiments, at least some function modules of the mobile communication module 150 and at least some modules of the processor 110 may be disposed in a same device.

The modem processor may include a modulator and a demodulator. The modulator is configured to modulate a to-be-sent low-frequency baseband signal into an intermediate or high-frequency signal. The demodulator is configured to demodulate a received electromagnetic wave signal into a low-frequency baseband signal. Then, the demodulator transfers the low-frequency baseband signal obtained through the demodulation to the baseband processor for processing. The low-frequency baseband signal is processed by the baseband processor, and then transferred to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110, and is disposed in a same device with the mobile communication module 150 or another function module.

The wireless communication module 160 may provide a wireless communication solution that is used for the electronic device 101 and that includes wireless local area network (Wireless Local Area Networks, WLAN), Bluetooth, a global navigation satellite system (Global Navigation Satellite System, GNSS), frequency modulation (Frequency Modulation, FM), near field communication (Near Field Communication, NFC), an infrared technology (Infrared, IR), and the like. The wireless communication module 160 may be one or more devices that integrate at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, the antenna 1 of the electronic device 101 is coupled to the mobile communication module 150, and the antenna 2 is coupled to the wireless communication module 160, so that the electronic device 101 may communicate with a network and another device by using a wireless communication technology. The wireless communication technology may include global system for mobile communications (Global System of Mobile communication, GSM), general packet radio service (General Packet Radio Service, GPRS), code division multiple access (Code Division Multiple Access, CDMA), wideband code division multiple access (Wideband Code Division Multiple Access, WCDMA), time division-synchronous code division multiple access (Time Division-Synchronous Code Division Multiple Access, TD-SCDMA), long term evolution (Long Term Evolution, LTE), global navigation satellite system (Global Navigation Satellite System, GNSS), wireless local area network (Wireless Local Area Network, WLAN), NFC, FM, and/or IR technology. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 101 may implement a display function by using a graphics processing unit (Graphics Processing Unit, GPU), a display 194, an application processor, and the like. The GPU is a microprocessor for image processing, and is connected to the display 194 and the application processor. The GPU is configured to perform mathematical and geometric calculation, and is used for graphics rendering. The processor 110 may include one or more GPUs, and executes an instruction to generate or change display information.

The display 194 is configured to display an image, a video, and the like. The display 194 includes a display panel. The display panel may use a liquid crystal display (Liquid Crystal Display, LCD), an organic light-emitting diode (Organic Light-Emitting Diode, OLED), an active-matrix organic light-emitting diode or an active-matrix organic light-emitting diode (Active-Matrix Organic Light Emitting Diode, AMOLED), a flexible light-emitting diode (Flex Light-Emitting Diode, FLED), a mini LED, a micro LED, a micro OLED, a quantum dot light-emitting diode (Quantum Dot Light Emitting Diodes, QLED), or the like. In some embodiments, the electronic device 101 may include one or more displays 194. For example, the electronic device 101 may include a first screen and a second screen. The first screen is a foldable screen. The first screen and the second screen may be flexible OLED displays. An OLED layer may be mounted on a flexible material such as plastic or metal foil to form the flexible OLED display.

The electronic device 101 may implement a shooting function by using the ISP, one or more cameras 193, the video codec, the GPU, one or more displays 194, the application processor, and the like.

The NPU is a neural-network (neural-network, NN) computing processor. The NPU quickly processes input information with reference to a structure of a biological neural network, for example, with reference to a transfer mode between human brain neurons, and may further continuously perform self-learning. The NPU can implement applications such as intelligent cognition of the electronic device 101, such as image recognition, facial recognition, speech recognition, and text understanding.

The external memory interface 120 may be configured to connect to an external storage card, for example, a micro SD card, to extend a storage capability of the electronic device 101. The external storage card communicates with the processor 110 through the external memory interface 120, to implement a data storage function. For example, data files such as music, a photo, and a video is stored in the external storage card.

The internal memory 121 may be configured to store one or more computer programs. The one or more computer programs include an instruction. The processor 110 may run the instruction stored in the internal memory 121, so that the electronic device 101 is enabled to perform the display control method, various function applications, data processing, and the like provided in some embodiments of the embodiments of this application. The internal memory 121 may include a program storage area and a data storage area. The program storage area may store an operating system. The program storage area may further store one or more applications (for example, gallery and contacts), and the like. The data storage area may store data (for example, photos and contacts) created during use of the electronic device 101, and the like. In addition, the internal memory 121 may include a high-speed random access memory, and may further include a non-volatile memory, for example, at least one magnetic disk storage device, a flash storage device, a universal flash storage (Universal Flash Storage, UFS), or the like. In some embodiments, the processor 110 may run the instruction stored in the internal memory 121, and/or an instruction stored in the memory disposed in the processor 110, so that the electronic device 101 is enabled to perform the display control method, various function applications, and data processing provided in the embodiments of this application.

The electronic device 101 may implement an audio function, for example, music playing and recording, by using the audio module 170, the speaker 170A, the receiver 170B, the microphone 170C, the headset interface 170D, the application processor, and the like.

The sensor 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, an infrared sensor, and the like. For example, the electronic device 101 may include two gyroscope sensors 180B. One gyroscope sensor 180B is disposed on one screen of the first screen, and the other gyroscope sensor 180B is disposed on the other screen of the first screen.

The touch sensor 180K may also be referred to as a touch panel or a touch-sensitive surface. The touch sensor 180K may be disposed on the display 194. The touch sensor 180K and the display 194 form a touchscreen, also referred to as a touch panel. The touch sensor 180K is configured to detect a touch operation performed on or near the touch sensor 180K. The touch sensor may transfer the detected touch operation to the application processor, to determine a type of a touch event. Visual output related to the touch operation may be provided by using the display 194. In some other embodiments, the touch sensor 180K may be alternatively disposed on a surface of the electronic device 101, and is at a position different from that of the display 194.

The bone conduction sensor 180M may obtain a vibration signal. In some embodiments, the bone conduction sensor 180M may obtain a vibration signal of a vibration bone of a human voice part. The bone conduction sensor 180M may also be in contact with a human pulse, and receive a blood pressure beating signal. In some embodiments, the bone conduction sensor 180M may alternatively be disposed in a headset, to form a bone conduction headset. The audio module 170 may obtain a voice signal through parsing based on the vibration signal that is of the vibration bone of the voice part and that is obtained by the bone conduction sensor 180M, to implement a voice function. The application processor may parse heart rate information based on the blood pressure beating signal obtained by the bone conduction sensor 180M, to implement a heart rate detection function.

The button 190 (also referred to as a function button) includes a screen locking button, a volume button, a screenshot button combination, and the like. The button 190 may be a mechanical button, or may be a touch button. The electronic device 101 may receive button input, and generate button signal input related to user settings and function control of the electronic device 101.

The SIM card interface 195 is configured to connect to a SIM card. The SIM card may be inserted in the SIM card interface 195 or removed from the SIM card interface 195, to contact with or separate from the electronic device 101. The electronic device 101 may support one or more SIM card interfaces. The SIM card interface 195 may support a nano-SIM card, a micro-SIM card, a SIM card, and the like. A plurality of cards may be simultaneously inserted in a same SIM card interface 195. The plurality of cards may be of a same type, or may be of different types. The SIM card interface 195 may also be compatible with different types of SIM cards. The SIM card interface 195 may also be compatible with the external storage card. The electronic device 101 interacts with a network by using the SIM card, to implement a call function, a data communication function, and the like. In some embodiments, the electronic device 101 uses an eSIM, namely, an embedded SIM card. The eSIM card may be embedded in the electronic device 101 and cannot be separated from the electronic device 101.

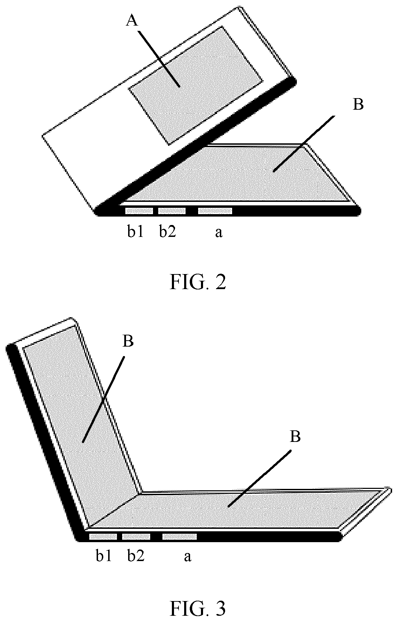

An example application scenario of the embodiments of this application includes but is not limited to the following: FIG. 2 and FIG. 3 are schematic diagrams of an electronic device according to the embodiments of this application. As shown in FIG. 2 and FIG. 3, the electronic device includes a first screen (a screen B) and a second screen (a screen A). The screen B may be an internal screen of the electronic device, and the screen A may be an external screen of the electronic device. The screen B is a foldable screen, and the electronic device can fold or unfold the electronic device by using the screen B. It is assumed that buttons on the electronic device are existing buttons. For example, as shown in FIG. 2 and FIG. 3, the electronic device includes only one screen locking button a, a group of volume buttons (a volume button b1 used to increase volume and a volume button b2 used to decrease volume), and a screenshot button combination (the volume button b2 used to decrease the volume and the screen locking button a). Based on an existing foldable electronic device, a user pre-controls at least one of the first screen and the second screen.

It should be noted that a position of a button on the electronic device is not limited in the embodiments of this application, and a combination of buttons included in a screenshot button combination is not limited either.

With reference to the foregoing application scenario, the following describes in detail the technical solutions in the embodiments of this application.

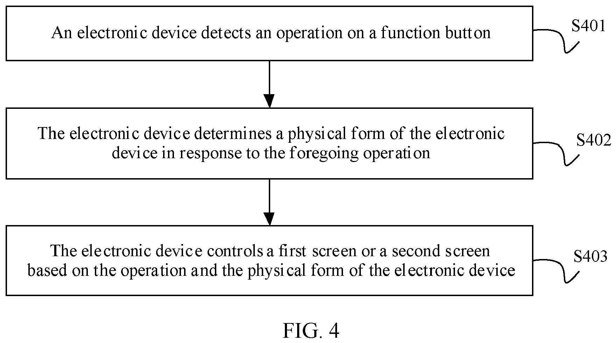

FIG. 4 is a flowchart of a screen control method according to an embodiment of this application. The method may be performed by the foregoing electronic device. As shown in FIG. 4, the method may include the following steps:
Step S401: The electronic device detects an operation on a function button.
Step S402: The electronic device determines a physical form of the electronic device in response to the foregoing operation.
Step S403: The electronic device controls the first screen or the second screen based on the operation and the physical form of the electronic device.

The function button may be a screen locking button, a volume button, or a screenshot button combination. The operation on the function button may be a press operation.

In another embodiment, the physical form of the electronic device may be a first physical form, and the first physical form means that an included angle of the first screen of the electronic device at a folding position is less than or equal to a preset angle. A value range of the preset angle is 0 degrees to 90 degrees. When the included angle of the first screen of the electronic device at the folding position is equal to 0 degrees, the first physical form is also referred to as a folded state. The physical form of the electronic device may alternatively be a second physical form, and the second physical form means that an included angle of the first screen of the electronic device at a folding position is greater than the preset angle. When the included angle of the first screen of the electronic device at the folding position is greater than 0 degrees, the second physical form is also referred to as an unfolded state.

In some other embodiments, in the method, step S401 may be performed before step S402. To be specific, the electronic device detects an operation on a function button, and the electronic device responds to the operation or determines a physical form of the electronic device when the operation is triggered. Alternatively, step S402 may be performed before step S401. To be specific, the electronic device first determines a physical form of the electronic device before obtaining an operation on a function button. When the electronic device obtains the operation on the function button, the electronic device controls the first screen or the second screen based on the obtained physical form of the electronic device. Alternatively, the electronic device may simultaneously perform step S401 and step S402. In conclusion, a sequence of step S401 and step S402 is not limited in this embodiment of this application.

Further, after the electronic device obtains the operation on the function button and the physical form of the electronic device, the electronic device responds to the operation on the function button, and if the physical form of the electronic device is the first physical form, controls the second screen of the electronic device, or if the physical form of the electronic device is the second physical form, controls the first screen of the electronic device.

Specifically, if the physical form of the electronic device is the first physical form, and the electronic device obtains a press operation on the screen locking button, the electronic device lights up the second screen. If the physical form of the electronic device is the first physical form, and the electronic device obtains a press operation on the volume button, the electronic device displays a volume display bar on the second screen. If the physical form of the electronic device is the first physical form, and the electronic device obtains a press operation on the screenshot button combination, the electronic device takes a screenshot of the second screen. If the physical form of the electronic device is the second physical form, and the electronic device obtains a press operation on the screen locking button, the electronic device lights up the first screen. If the physical form of the electronic device is the second physical form, and the electronic device obtains a press operation on the volume button, the electronic device displays a volume display bar on the first screen. If the physical form of the electronic device is the second physical form, and the electronic device obtains a press operation on the screenshot button combination, the electronic device takes a screenshot of the first screen.

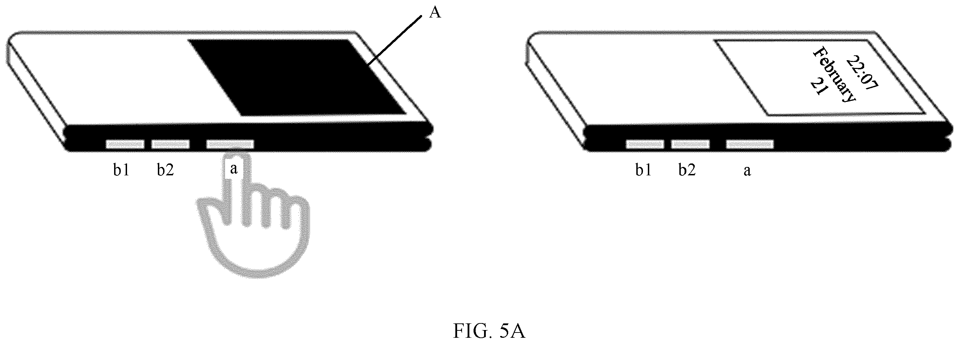

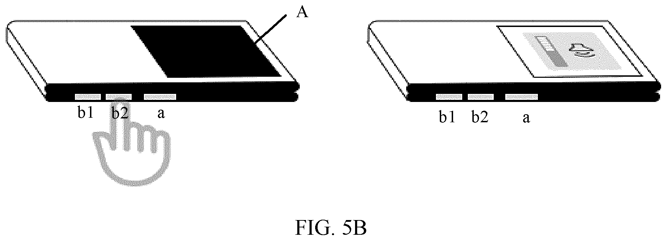

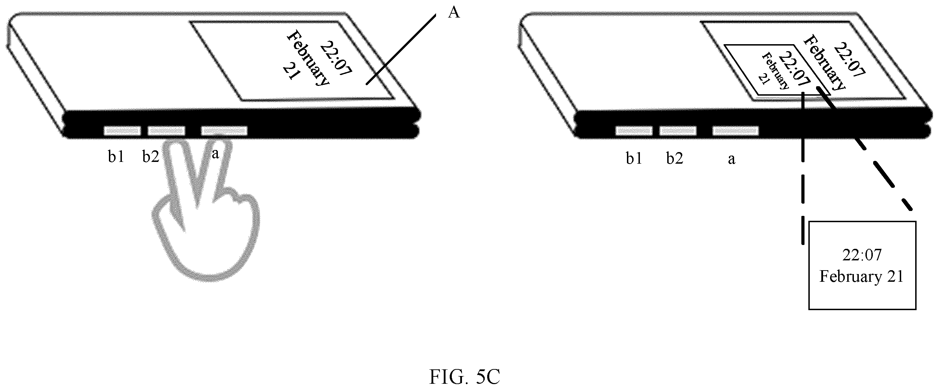

For example, FIG. 5A to FIG. 5F are schematic diagrams of an electronic device according to an embodiment of this application. As shown in FIG. 5A, the electronic device is currently in the first physical form. In this case, when a user presses the screen locking button (a button a), as shown in the accompanying drawing on the right of FIG. 5A, the second screen (a screen A) is lit up. As shown in FIG. 5B, the electronic device is currently in the first physical form. In this case, when the user presses the volume button (a button b2) used to decrease volume, as shown in the accompanying drawing on the right of FIG. 5B, the second screen (the screen A) displays a volume display bar. As shown in FIG. 5C, the electronic device is currently in the first physical form. In this case, when the user presses the screenshot button combination (the volume button b2 used to decrease the volume and the screen locking button a), as shown in the accompanying drawing on the right of FIG. 5C, the second screen (the screen A) is captured. For clarity, a dashed line points to a screenshot result.

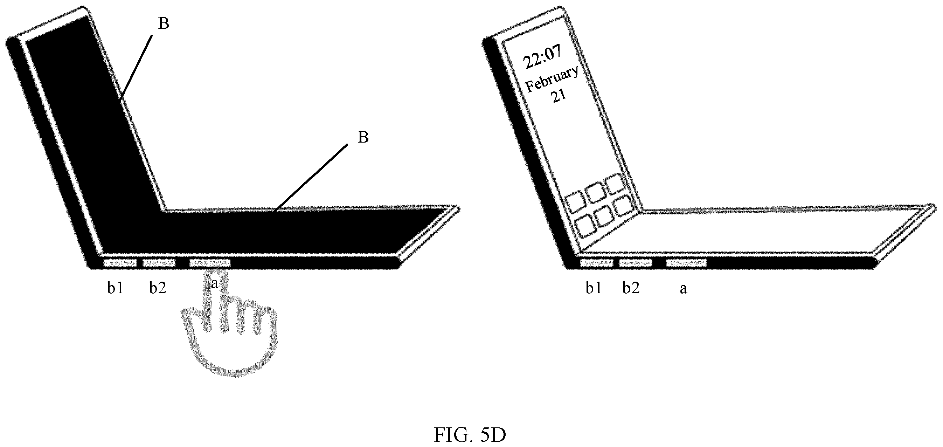

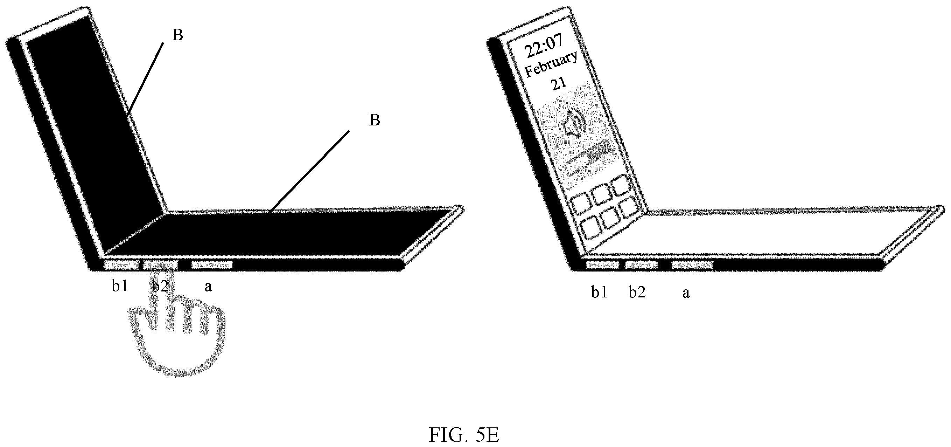

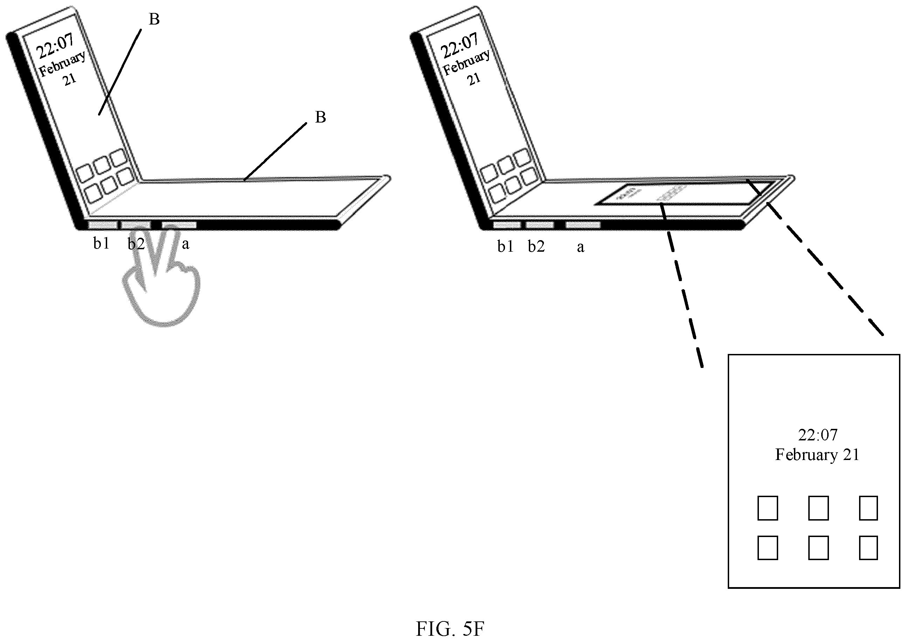

As shown in FIG. 5D, the electronic device is currently in the second physical form. In this case, when the user presses the screen locking button (the button a), as shown in the accompanying drawing on the right of FIG. 5D, the first screen (a screen B) is lit up. As shown in FIG. 5E, the electronic device is currently in the second physical form. In this case, when the user presses the volume button (the button b2) used to decrease the volume, as shown in the accompanying drawing on the right of FIG. 5E, the first screen (the screen B) displays the volume display bar. As shown in FIG. 5F, the electronic device is currently in the second physical form. In this case, when the user presses the screenshot button combination (the volume button b2 used to decrease the volume and the screen locking button a), as shown in the accompanying drawing on the right of FIG. 5F, the first screen (the screen B) is captured. For clarity, a dashed line points to a screenshot result.

In conclusion, the embodiments of this application provide the screen control method. The electronic device may control the first screen or the second screen based on the operation on the function button and the physical form of the electronic device. Therefore, in different physical forms of the electronic device, different screens of the electronic device can be controlled by using the function button. For example, when the electronic device is in the first physical form, the electronic device can control the second screen by using the function button. When the electronic device is in the second physical form, the electronic device can control the first screen by using the function button. Therefore, a probability of a misoperation can be reduced, thereby improving reliability of the electronic device. In addition, the electronic device controls the screen of the electronic device without adding an additional button. Therefore, costs of the electronic device are reduced. In addition, because a user does not need to memorize complex button settings, user experience can be improved.

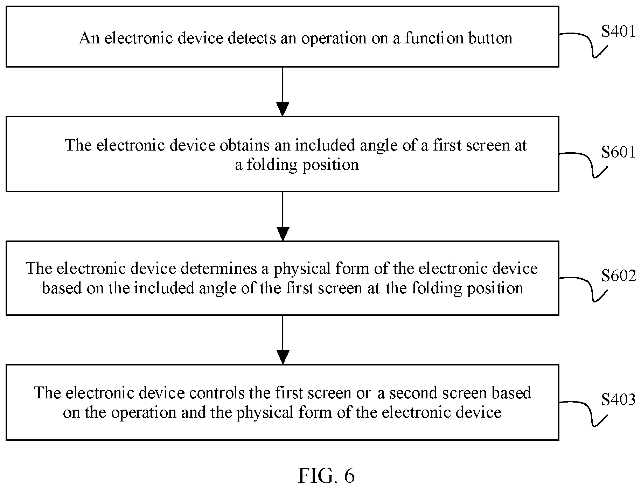

FIG. 6 is a schematic flowchart of a screen control method according to another embodiment of this application. The method may be performed by the foregoing electronic device. As shown in FIG. 6, the step S402 may include the following steps:
Step S601: The electronic device obtains an included angle of a first screen at a folding position.
Step S602: The electronic device determines a physical form of the electronic device based on the included angle of the first screen at the folding position.

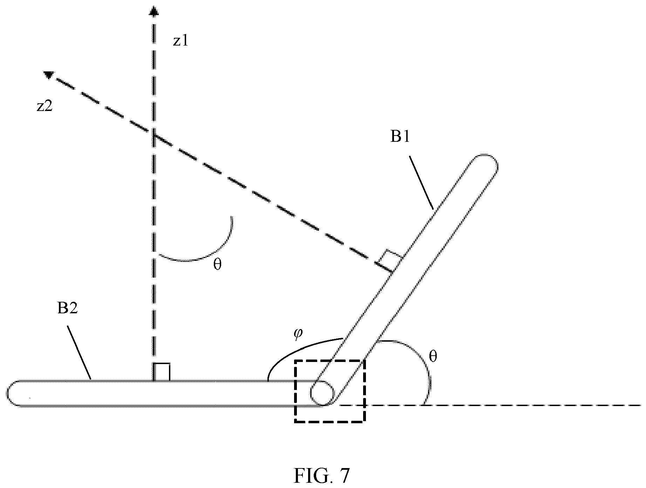

Specifically, FIG. 7 is a schematic diagram of an electronic device according to an embodiment of this application. As shown in FIG. 7, the first screen includes two screens: a screen B1 and a screen B2. The folding position of the first screen is formed between the screen B1 and the screen B2 (a position marked with a dashed box in FIG. 7 is the folding position of the first screen). The electronic device determines a normal vector of the screen B1 and a normal vector of the screen B2. The electronic device determines an included angle between the normal vector of the screen B1 and the normal vector of the screen B2. The electronic device calculates a difference between 180 degrees and the included angle between the normal vector of the screen B1 and the normal vector of the screen B2, to obtain an included angle of the first screen at the folding position.

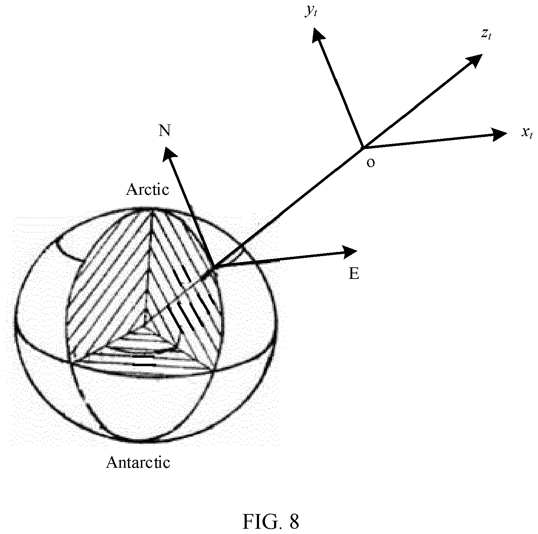

As mentioned above, one gyroscope sensor is configured on each of the screen B1 and the screen B2. The electronic device may separately calculate the normal vector of the screen B1 and the normal vector of the screen B2 by using the gyroscope sensor on each of the screen B1 and the screen B2. Details are as follows: FIG. 8 is a schematic diagram of a geographical coordinate system established based on the gyroscope sensor according to an embodiment of this application. An origin of the geographical coordinate system *oxₜyₜzₜ* is located at a center point of the gyroscope sensor, *xₜ* axis points east along a local latitude line, *yₜ* axis points north along a local meridian line, and *zₜ* axis points up along a local geographic vertical and forms a right-hand rectangular coordinate system with *xₜ, yₜ.* A plane formed by the *xₜ* axis and the *yₜ* axis is a local horizontal plane, and a plane formed by the *yₜ* axis and the *zₜ* axis is a local meridian plane. It is assumed that the normal vector of the screen B1 is represented by *z*1 , and the normal vector of the screen B2 is represented by z2. Although the gyroscope sensor on the screen B1 and the gyroscope sensor on the screen B2 are not at a same location, in other words, an origin of a geographic coordinate system of the gyroscope sensor based on the screen B1 does not overlap an origin of a geographic coordinate system of the gyroscope sensor based on the screen B2, *xₜ* axes, *yₜ* axes, and *zₜ* axes of the two geographic coordinate systems are respectively parallel, that is, it may be considered that the geographic coordinate systems of the screen B1 and the screen B2 are parallel. Based on this, as shown in FIG. 7, it is assumed that an included angle between the screen B1 and the screen B2 is *θ* . *θ* may be obtained according to a formula *z*1·*z*2= |*z*1∥*z*2|cos*θ*, where "· " represents point multiplication between vectors. Further, it is assumed that the included angle of the electronic device at the folding position of the first screen is <P . <P may be obtained according to a formula *ϕ* = *π* - *θ*.

After the electronic device obtains the included angle *ϕ* of the first screen at the folding position, if the included angle *ϕ* of the first screen at the folding position is less than or equal to a preset angle, determining that a physical form of the electronic device is a first physical form; if the included angle *ϕ* of the first screen at the folding position is greater than the preset angle, determining that the physical form of the electronic device is a second physical form.

It should be noted that, considering that a case in which the electronic device is usually tilted is relatively common, to improve accuracy of calculating *θ* of the electronic device, an acceleration sensor is further configured on each of the screen B1 and the screen B2. The acceleration sensor is used to implement tilt compensation for the electronic device. The acceleration sensor may implement the tilt compensation by using the conventional technology. This is not limited in this application.

In the embodiments of this application, the electronic device may determine the physical form of the electronic device based on the included angle of the first screen at the folding position. Based on this, in different physical forms of the electronic device, different screens of the electronic device may be controlled by using the foregoing function buttons. For example, when the electronic device is in the first physical form, the electronic device can control the second screen by using the function button. When the electronic device is in the second physical form, the electronic device can control the first screen by using the function button. Therefore, a probability of a misoperation can be reduced, thereby improving reliability of the electronic device. In addition, the electronic device controls the screen of the electronic device without adding an additional button. Therefore, costs of the electronic device are reduced. In addition, because a user does not need to memorize complex button settings, user experience can be improved.

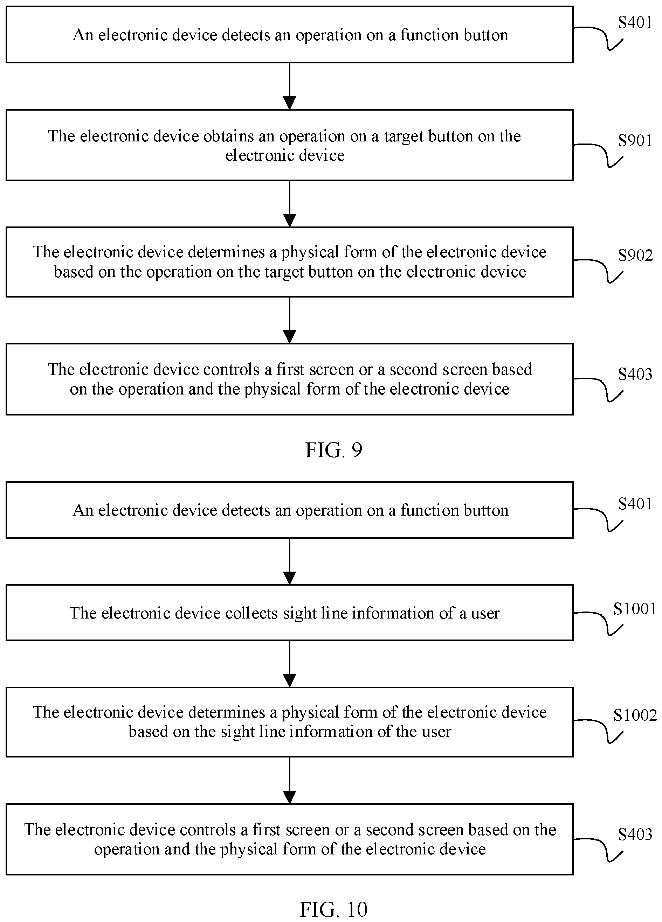

FIG. 9 is a flowchart of a screen control method according to still another embodiment of this application. The method may be performed by the foregoing electronic device. As shown in FIG. 9, the step S402 may include the following steps:
Step S901: The electronic device obtains an operation on a target button on the electronic device.
Step S902: The electronic device determines a physical form of the electronic device based on the operation on the target button on the electronic device.

The operation on the target button on the electronic device is used to control the physical form of the electronic device. For example, when the operation on the target button on the electronic device is a first operation, the physical form of the electronic device is a first physical form. When the operation on the target button on the electronic device is a second operation, the physical form of the electronic device is a second physical form. As mentioned above, the first physical form means that an included angle of a first screen of the electronic device at a folding position is less than or equal to a preset angle. The second physical form means that the included angle of the first screen of the electronic device at the folding position is greater than the preset angle.

The target button is similar to a button that is on a mobile phone and that is used to control a sound mode of the mobile phone. When the button used to control the sound mode of the mobile phone is in a first operation, the mobile phone is in a mute mode. When the button used to control the sound mode of the mobile phone is in a second operation, the mobile phone is in a non-mute mode. Similarly, when the operation on the target button on the electronic device is the first operation, a processor in the electronic device controls, by using a control component, the electronic device to be in the first physical form. When the operation on the target button on the electronic device is the second operation, the processor in the electronic device controls, by using the control component, the electronic device to be in the second physical form. It can be learned that the first operation on the target button corresponds to the first physical form of the electronic device, and the second operation on the target button corresponds to the second physical form of the electronic device. Therefore, once the electronic device obtains that the operation on the target button on the electronic device is the first operation, the electronic device determines that a physical status of the electronic device is a first physical status. Once the electronic device obtains that the operation on the target button on the electronic device is the second operation, the electronic device determines that the physical status of the electronic device is a second physical status.

In the embodiments of this application, the electronic device can determine the physical form of the electronic device based on the operation on the target button on the electronic device. Based on this, in different physical forms of the electronic device, different screens of the electronic device may be controlled by using the foregoing function buttons. For example, when the electronic device is in the first physical form, the electronic device can control the second screen by using the function button. When the electronic device is in the second physical form, the electronic device can control the first screen by using the function button. Therefore, a probability of a misoperation can be reduced, thereby improving reliability of the electronic device. In addition, in the embodiments of this application, compared with an existing electronic device, only one target button is added to the electronic device. Therefore, because a user does not need to memorize complex button settings, user experience is improved.

FIG. 10 is a flowchart of a screen control method according to yet another embodiment of this application. The method may be performed by the foregoing electronic device. As shown in FIG. 10, the step S402 may include the following steps:
Step S1001: The electronic device collects sight line information of a user.
Step S1002: The electronic device determines a physical form of the electronic device based on the sight line information of the user.

The sight line information of the user includes at least one of the following: information about an intersection point between a sight line of the user and the electronic device, or information about a camera (for example, an identifier of a front-facing camera or an identifier of a rear-facing camera) used to collect the sight line of the user.

For example, after the electronic device collects the sight line information of the user, the electronic device determines that the sight line of the user is obtained by using the front-facing camera. In this case, the electronic device determines that the sight line of the user falls on a first screen, and the electronic device determines that a physical form of the electronic device is a first physical form. After the electronic device collects the sight line information of the user, the electronic device determines that the sight line of the user is obtained by using the rear-facing camera. In this case, the electronic device determines that the sight line of the user falls on a second screen, and the electronic device determines that the physical form of the electronic device is a second physical form.

For example, the first screen and the second screen of the electronic device are located in different coordinate systems. When the electronic device collects that the intersection point between the sight line of the user and the electronic device belongs to the coordinate system of the first screen, in other words, the electronic device determines that the sight line of the user falls on the first screen. In this case, the electronic device determines that the physical form of the electronic device is the first physical form. When the electronic device collects that the intersection point between the sight line of the user and the electronic device belongs to the coordinate system of the second screen, in other words, the electronic device determines that the sight line of the user falls on the second screen. In this case, the electronic device determines that the physical form of the electronic device is the second physical form.

The electronic device may determine a distance and an included angle between the sight line of the user and the electronic device by using an infrared sensor on the electronic device. The infrared sensor transmits the distance and the included angle to a processor in the electronic device. The processor has obtained the coordinate system of the first screen and the coordinate system of the second screen in advance. The processor may determine, based on the distance and the included angle, that the intersection point of the electronic device and the electronic device belong to the coordinate system of the first screen or the coordinate system of the second screen.

In the embodiments of this application, the electronic device may determine the physical form of the electronic device based on the sight line information of the user. Based on this, in different physical forms of the electronic device, different screens of the electronic device may be controlled by using the foregoing function buttons. For example, when the electronic device is in the first physical form, the electronic device can control the second screen by using the function button. When the electronic device is in the second physical form, the electronic device can control the first screen by using the function button. Therefore, a probability of a misoperation can be reduced, thereby improving reliability of the electronic device. In addition, the electronic device controls the screen of the electronic device without adding an additional button. Therefore, costs of the electronic device are reduced. In addition, because a user does not need to memorize complex button settings, user experience can be improved.

In the embodiments of this application, the electronic device may further determine the physical form of the electronic device in the following manner:
In an embodiment of this application, an ambient light sensor is configured on each of the first screen and the second screen in the electronic device. When the ambient light sensor on the first screen determines that a received optical power is less than a first preset power, and/or the ambient light sensor on the second screen determines that a received optical power is greater than or equal to a second preset power, the electronic device determines that the physical form of the electronic device is the first physical form. On the contrary, when the ambient light sensor on the first screen determines that the received optical power is greater than or equal to the first preset power, and/or the ambient light sensor on the second screen determines that the received optical power is less than the second preset power, the electronic device determines that the physical form of the electronic device is the second physical form.

In an embodiment of this application, an infrared sensor is configured on each of the first screen and the second screen in the electronic device. When the infrared sensor on the first screen determines that received infrared light power is less than a third preset power, and/or the infrared sensor on the second screen determines that received infrared light power is greater than or equal to a fourth preset power, the electronic device determines that the physical form of the electronic device is the first physical form. On the contrary, when the infrared sensor on the first screen determines that the received infrared light power is greater than or equal to the third preset power, and/or the infrared sensor on the second screen determines that the received infrared light power is less than the fourth preset power, the electronic device determines that the physical form of the electronic device is the second physical form.

In the embodiments of this application, the electronic device may determine the physical form of the electronic device by using the ambient light sensor or the infrared sensor. Based on this, in different physical forms of the electronic device, different screens of the electronic device may be controlled by using the foregoing function buttons. For example, when the electronic device is in the first physical form, the electronic device can control the second screen by using the function button. When the electronic device is in the second physical form, the electronic device can control the first screen by using the function button. Therefore, a probability of a misoperation can be reduced, thereby improving reliability of the electronic device. In addition, the electronic device controls the screen of the electronic device without adding an additional button. Therefore, costs of the electronic device are reduced. In addition, because a user does not need to memorize complex button settings, user experience can be improved.

It should be noted that, in the foregoing embodiments, first, the electronic device detects the operation on the function button, and determines the physical form of the electronic device. Then, the electronic device controls the first screen or the second screen based on the operation and the physical form of the electronic device. Actually, the electronic device does not need to detect the operation on the function button, but obtains a user action. The electronic device controls the first screen or the second screen based on the obtained user action and the physical form of the electronic device.

Specifically, when the physical form of the electronic device is the first physical form, if the electronic device obtains the user action, the electronic device controls the second screen. When the physical form of the electronic device is the second physical form, if the electronic device obtains the user action, the electronic device controls the first screen.

For example, when the physical form of the electronic device is the first physical form, if the electronic device obtains a hand lifting action, the electronic device lights up the second screen. When the physical form of the electronic device is the second physical form, if the electronic device obtains the hand lifting action, the electronic device lights up the first screen.

For example, when the physical form of the electronic device is the first physical form, if the electronic device obtains an OK gesture, the electronic device captures the second screen. When the physical form of the electronic device is the second physical form, if the electronic device obtains the OK gesture, the electronic device captures the first screen.

For example, when the physical form of the electronic device is the first physical form, if the electronic device obtains a like action, the electronic device displays the volume display bar on the second screen. When the physical form of the electronic device is the first physical form, if the electronic device obtains the like action, the electronic device displays the volume display bar on the first screen.

It should be noted that a function of the user action may be set before delivery of the electronic device, or may be set based on an actual requirement of the user. This is not limited in the embodiments of this application.

In the embodiments of this application, the electronic device controls the first screen or the second screen based on the obtained user action and the physical form of the electronic device. Therefore, a probability of a misoperation can be reduced, thereby improving reliability of the electronic device. In addition, the electronic device controls the screen of the electronic device without adding an additional button. Therefore, costs of the electronic device are reduced. In addition, because a user does not need to memorize complex button settings, user experience can be improved.

In any one of the foregoing embodiments, the electronic device controls only one of the first screen and the second screen. Based on this, the electronic device may further control the other one of the first screen and the second screen.

Specifically, when the physical status of the electronic device is the second physical status, as described above, the electronic device controls the first screen. When the user further needs to control the second screen, the user taps or touches the second screen. After the electronic device obtains the tap or touch action on the second screen, the electronic device may control the first screen and the second screen.

For example, if the electronic device determines to light up the first screen, and obtains the touch operation on the second screen, the electronic device lights up the first screen and the second screen. The electronic device may simultaneously light up the first screen and the second screen; or first light up the first screen, and then light up the second screen; or first light up the second screen, and then light up the first screen. This is not limited in the embodiments of this application.

The electronic device may determine, in the following manner, to light up the first screen: The electronic device obtains the operation on the screen locking button, and determines that the physical form of the electronic device is the second physical form. Alternatively, the electronic device determines the user action, and determines that the physical form of the electronic device is the second physical form. Further, it is assumed that a time at which the electronic device obtains the operation on the screen locking button is a first time, that determining the physical form of the electronic device is the second physical form is a second time. A larger one of the first time and the second time is used as a start time. If the electronic device obtains the touch operation on the second screen within a first preset duration, the electronic device simultaneously lights up the first screen and the second screen. The larger one of the first time and the second time is used as the start time. If the electronic device obtains the touch operation on the second screen beyond the first preset duration, the electronic device first lights up the first screen, and then lights up the second screen. Before the electronic device obtains the operation on the screen locking button, the first time is used as an end time. If the electronic device obtains the touch operation on the second screen within the first preset duration, the electronic device first lights up the second screen, and then lights up the first screen. The first preset duration may be set based on an actual situation. This is not limited in the embodiments of this application.

For example, if the electronic device determines to display the volume display bar on the first screen, and obtains the touch operation on the second screen, the electronic device displays the volume display bar on the first screen and the second screen. The electronic device may simultaneously display the volume display bar on the first screen and the second screen; or first display the volume display bar on the first screen, and then display the volume display bar on the second screen; or first display the volume display bar on the second screen, and then display the volume display bar on the first screen. This is not limited in the embodiments of this application.

The electronic device may determine, in the following manner, to display the volume display bar on the first screen: The electronic device obtains the operation on the volume button, and determines that the physical form of the electronic device is the second physical form. Alternatively, as recorded in embodiment 5, the electronic device obtains a corresponding user action, and determines that the physical form of the electronic device is the second physical form. Further, it is assumed that a time at which the electronic device obtains the operation on the volume button is a first time, that determining the physical form of the electronic device is the second physical form is a second time. A larger one of the first time and the second time is used as a start time. If the electronic device obtains the touch operation on the second screen within a second preset duration, the electronic device simultaneously displays the volume display bar on the first screen and the second screen. The larger one of the first time and the second time is used as the start time. If the electronic device obtains the touch operation on the second screen beyond the second preset duration, the electronic device first displays the volume display bar on the first screen, and then displays the volume display bar on the second screen. Before the electronic device obtains the operation on the volume button, the first time is used as an end time. If the electronic device obtains the touch operation on the second screen within the second preset duration, the electronic device first displays the volume display bar on the second screen, and then displays the volume display bar on the first screen. The second preset duration may be set based on an actual situation. This is not limited in the embodiments of this application.

For example, if the electronic device determines to capture the first screen, and obtains the touch operation on the second screen, the electronic device may simultaneously capture the first screen and the second screen; or first capture the first screen, and then capture the second screen; or first capture the second screen, and then capture the first screen.

The electronic device may determine, in the following manner, to capture the first screen: The electronic device obtains the operation on the screenshot button combination, and determines that the physical form of the electronic device is the second physical form. Alternatively, as recorded in embodiment 5, the electronic device obtains a corresponding user action, and determines that the physical form of the electronic device is the second physical form. Further, it is assumed that a time at which the electronic device obtains the operation on the screenshot button combination is a first time, that determining the physical form of the electronic device is the second physical form is a second time. A larger one of the first time and the second time is used as a start time. If the electronic device obtains the touch operation on the second screen within a third preset duration, the electronic device simultaneously captures the first screen and the second screen. The larger one of the first time and the second time is used as the start time. If the electronic device obtains the touch operation on the second screen beyond the third preset duration, the electronic device first captures the first screen, and then captures the second screen. Before the electronic device obtains the operation on the screenshot button combination, the first time is used as an end time. If the electronic device obtains the touch operation on the second screen within the third preset duration, the electronic device first captures the second screen, and then captures the first screen. The third preset duration may be set based on an actual situation. This is not limited in the embodiments of this application.

In the embodiments of this application, the electronic device may control the first screen and the second screen. For example, light up the first screen and the second screen, or display the volume display bar on the first screen and the second screen, or capture the first screen and the second screen. Therefore, functions of the electronic device are enriched, so that user experience is improved.

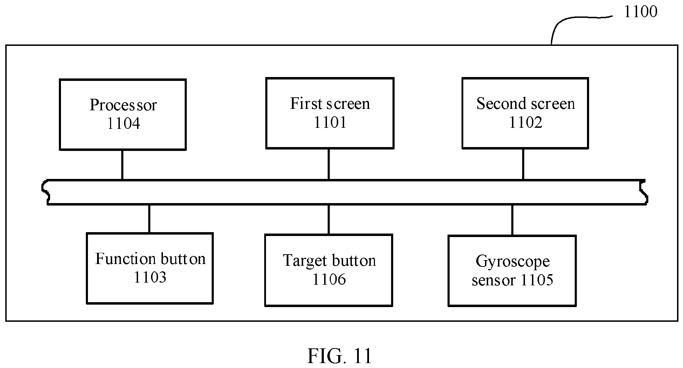

FIG. 11 is a schematic diagram of an electronic device 1100 according to an embodiment of this application. As shown in FIG. 11, the electronic device includes a first screen 1101 and a second screen 1102. The first screen 1101 is a foldable screen. The electronic device further includes a function button 1103 and a processor 1104.

The processor 1104 is configured to: detect an operation on the function button 1103; determine a physical form of the electronic device in response to the detected operation; and control the first screen 1101 or the second screen 1102 based on the operation and the physical form of the electronic device.

Optionally, the processor 1104 is specifically configured to: obtain an included angle of the first screen 1101 at a folding position; and determine the physical form of the electronic device based on the included angle of the first screen 1101 at the folding position.

Optionally, the processor 1104 is specifically configured to: if the included angle of the first screen 1101 at the folding position is less than or equal to a preset angle, determine that the physical form of the electronic device is a first physical form; and if the included angle of the first screen 1101 at the folding position is greater than the preset angle, determine that the physical form of the electronic device is a second physical form.

Optionally, one gyroscope sensor 1105 is configured on each of the first screen 1101 and the second screen 1102. The processor 1104 is specifically configured to: determine a normal vector of one screen in the first screen 1101 by using the gyroscope sensor 1105 on the first screen 1101, and determine a normal vector of the other screen in the first screen 1101 by using the gyroscope sensor 1105 on the first screen 1101; determine an included angle between the normal vector of one screen in the first screen 1101 and the normal vector of the other screen in the first screen 1101; and calculate a difference between 180 degrees and the included angle between the normal vector of one screen in the first screen 1101 and the normal vector of the other screen in the first screen 1101, to obtain the included angle of the first screen 1101 at the folding position.

Optionally, the preset angle is 0 degrees.

Optionally, the electronic device further includes a target button 1106. The processor 1104 is specifically configured to: obtain an operation on the target button 1106 on the electronic device; and determine the physical form of the electronic device based on the operation on the target button 1106 on the electronic device.

Optionally, the processor 1104 is specifically configured to: if the operation on the target button 1106 on the electronic device is a first operation, determine that the physical form of the electronic device is a first physical form; and if the operation on the target button 1106 on the electronic device is a second operation, determine that the physical form of the electronic device is a second physical form.

Optionally, the processor 1104 is specifically configured to: collect a sight line information of a user; and determine the physical form of the electronic device based on the sight line information of the user.

Optionally, the processor 1104 is specifically configured to: if the electronic device determines that a sight line of the user falls on the second screen 1102 based on the sight line information of the user, determine that the physical form of the electronic device is the first physical form; and if the electronic device determines that a sight line of the user falls on the first screen 1101 based on the sight line information of the user, determine that the physical form of the electronic device is the second physical form.

Optionally, the processor 1104 is specifically configured to: respond to the operation; and if the physical form of the electronic device is the first physical form, control the second screen 1102 of the electronic device; or if the physical form of the electronic device is the second physical form, control the first screen 1101 of the electronic device.

Optionally, the function button 1103 is a screen locking button, a volume button, or a screenshot button combination.

It should be noted that, as shown in FIG. 1, the electronic device may further include: a mobile communication module, a wireless communication module, a speaker, a receiver, an audio module, a microphone, an acceleration sensor, a fingerprint sensor, an ambient light sensor, a charging management module, a power management module, and the like. For details, refer to the embodiment corresponding to FIG. 1.

In conclusion, this application provides an electronic device. The electronic device may perform the foregoing screen control method. For content and an effect of the screen control method, refer to the method embodiment. Details are not described herein again.

The embodiments of this application further provide a computer storage medium. The computer storage medium includes a computer instruction, and the computer instruction is used to implement the foregoing screen control method. For content and an effect of the screen control method, refer to the method embodiment. Details are not described herein again.

The embodiments of this application further provide a computer program product. The program product includes a computer instruction, and the computer instruction is used to implement the foregoing screen control method. For content and an effect of the screen control method, refer to the method embodiment. Details are not described herein again.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of the present invention are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A screen control method, wherein an electronic device comprises a first screen and a second screen, the first screen is a foldable screen, the second screen is an external screen, the electronic device can fold or unfold the electronic device by using the first screen, and the method comprises:
detecting (S401), by the electronic device, an operation on a function button, wherein the function button is a mechanical button arranged on a lateral side of the electronic device;
determining (S402), by the electronic device, a physical form of the electronic device in response to the detection of the operation; and
controlling (S403), by the electronic device, the first screen or the second screen based on the operation and the physical form of the electronic device;
wherein the controlling, by the electronic device, the first screen or the second screen based on the operation and the physical form of the electronic device comprises:
if the physical form of the electronic device is a first physical form, controlling the second screen of the electronic device based on the operation, wherein the first physical form is folded;
if the physical form of the electronic device is a second physical form, controlling the first screen of the electronic device based on the operation, wherein the second physical form is unfolded.

2. The method according to claim 1, wherein the determining, by the electronic device, a physical form of the electronic device in response to the detection of the operation comprises:
obtaining (S601), by the electronic device, an included angle of the first screen at a folding position; and
determining (S602), by the electronic device, the physical form of the electronic device based on the included angle of the first screen at the folding position.

3. The method according to claim 2, wherein the determining, by the electronic device, the physical form of the electronic device based on the included angle of the first screen at the folding position comprises:
if the included angle of the first screen at the folding position is less than or equal to a preset angle, determining that the physical form of the electronic device is the first physical form; or
if the included angle of the first screen at the folding position is greater than the preset angle, determining that the physical form of the electronic device is the second physical form.

4. The method according to claim 2 or 3, wherein the obtaining, by the electronic device, an included angle of the first screen at a folding position comprises:
determining, by the electronic device, a normal vector of one screen in the first screen and a normal vector of the other screen in the first screen;
determining, by the electronic device, an included angle between the normal vector of one screen in the first screen and the normal vector of the other screen in the first screen; and
calculating, by the electronic device, a difference between 180 degrees and the included angle between the normal vector of one screen in the first screen and the normal vector of the other screen in the first screen, to obtain the included angle of the first screen at the folding position.

5. The method according to claim 3, wherein the preset angle is 0 degrees.

6. The method according to claim 1, wherein the determining, by the electronic device, a physical form of the electronic device in response to the detection of the operation comprises:
collecting (S 1001), by the electronic device, sight line information of a user; and
determining (S1002), by the electronic device, the physical form of the electronic device based on the sight line information of the user.

7. The method according to claim 6,
wherein the determining, by the electronic device, the physical form of the electronic device based on the sight line information of the user comprises:
if the electronic device determines a sight line of the user falls on the second screen based on the sight line information of the user, determining that the physical form of the electronic device is the first physical form; or
if the electronic device determines the sight line of the user falls on the first screen based on the sight line information of the user, determining that the physical form of the electronic device is the second physical form.

8. The method according to any one of claims 1 to 7, wherein the function button is a screen locking button, a volume button, or a screenshot button combination.

9. An electronic device, wherein the electronic device comprises a first screen and a second screen, and the first screen is a foldable screen, the second screen is an external screen; and the electronic device further comprises a function button and a processor, wherein
the processor is configured to:
detect an operation on the function button, wherein the function button is a mechanical button arranged on a lateral frame of the electronic device;
determine a physical form of the electronic device in response to the detection of the operation; and
control the first screen or the second screen based on the operation and the physical form of the electronic device;
wherein the controlling, by the electronic device, the first screen or the second screen based on the operation and the physical form of the electronic device comprises:
if the physical form of the electronic device is a first physical form, controlling the second screen of the electronic device based on the operation, wherein the first physical form is folded;
if the physical form of the electronic device is a second physical form, controlling the first screen of the electronic device based on the operation, wherein the second physical form is unfolded.

10. The electronic device according to claim 9, wherein the processor is specifically configured to:
obtain an included angle of the first screen at a folding position; and
determine the physical form of the electronic device based on the included angle of the first screen at the folding position.

11. The electronic device according to claim 10, wherein the processor is specifically configured to:
if the included angle of the first screen at the folding position is less than or equal to a preset angle, determine that the physical form of the electronic device is the first physical form; or
if the included angle of the first screen at the folding position is greater than the preset angle, determine that the physical form of the electronic device is the second physical form.

12. The electronic device according to claim 10 or 11, wherein one gyroscope sensor is configured on each of the first screen and the second screen; and
the processor is specifically configured to:
determine a normal vector of one screen in the first screen by using the gyroscope sensor on the first screen, and determine a normal vector of the other screen in the first screen by using the gyroscope sensor on the first screen;
determine an included angle between the normal vector of one screen in the first screen and the normal vector of the other screen in the first screen; and
calculate a difference between 180 degrees and the included angle between the normal vector of one screen in the first screen and the normal vector of the other screen in the first screen, to obtain the included angle of the first screen at the folding position.

13. The electronic device according to claim 11, wherein the preset angle is 0 degrees.

14. The electronic device according to claim 9, wherein the processor is specifically configured to:
collect sight line information of a user; and
determine the physical form of the electronic device based on the sight line information of the user.

15. The electronic device according to claim 14 wherein the processor is specifically configured to:
if the electronic device determines a sight line of the user falls on the second screen based on the sight line information of the user, determine that the physical form of the electronic device is the first physical form; or
if the electronic device determines the sight line of the user falls on the first screen based on the sight line information of the user, determine that the physical form of the electronic device is the second physical form.

16. The electronic device according to any one of claims 9 to 15, wherein the function button is a screen locking button, a volume button, or a screenshot button combination.

17. A computer storage medium, wherein the computer storage medium comprises computer instructions which, when executed by a computer, cause the computer to carry out the screen control method according to any one of claims 1 to 8.

## Patentansprüche

1. Verfahren zur Steuerung eines Bildschirms, wobei ein elektronisches Gerät einen ersten Bildschirm und einen zweiten Bildschirm umfasst, der erste Bildschirm ein faltbarer Bildschirm und der zweite Bildschirm ein externer Bildschirm ist, das elektronische Gerät unter Verwendung des ersten Bildschirms falten oder entfalten kann und das Verfahren Folgendes umfasst:
Erfassen (S401) einer Betätigung einer Funktionstaste durch das elektronische Gerät, wobei die Funktionstaste eine mechanische Taste ist, die seitlich am elektronischen Gerät angeordnet ist;
Bestimmen (S402), durch das elektronische Gerät, einer physischen Form des elektronischen Geräts als Reaktion auf die Erkennung der Betätigung; und
Steuern (S403) des ersten Bildschirms oder des zweiten Bildschirms durch das elektronische Gerät basierend auf der Betätigung und der physischen Form des elektronischen Geräts;
wobei das Steuern des ersten Bildschirms oder des zweiten Bildschirms durch das elektronische Gerät basierend auf der Betätigung und der physischen Form des elektronischen Geräts Folgendes umfasst:
wenn die physische Form des elektronischen Geräts eine erste physische Form ist, Steuern des zweiten Bildschirms des elektronischen Geräts basierend auf der Betätigung, wobei die erste physische Form die gefaltete ist;
wenn die physische Form des elektronischen Geräts eine zweite physische Form ist, Steuern des ersten Bildschirms des elektronischen Geräts basierend auf der Betätigung, wobei die zweite physische Form die ungefaltete ist.

2. Verfahren nach Anspruch 1, wobei das Bestimmen einer physischen Form des elektronischen Geräts durch das elektronische Gerät als Reaktion auf die Erkennung der Betätigung Folgendes umfasst:
Erhalten (S601) eines eingeschlossenen Winkels des ersten Bildschirms an einer Faltstelle durch das elektronische Gerät; und
Bestimmen (S602) der physischen Form des elektronischen Geräts durch das elektronische Gerät basierend auf dem eingeschlossenen Winkel des ersten Bildschirms an der Faltstelle.

3. Verfahren nach Anspruch 2, wobei das Bestimmen der physischen Form des elektronischen Geräts durch das elektronische Gerät basierend auf dem eingeschlossenen Winkel des ersten Bildschirms an der Faltstelle Folgendes umfasst:
wenn der eingeschlossene Winkel des ersten Bildschirms an der Faltstelle kleiner oder gleich einem voreingestellten Winkel ist, Bestimmen, dass die physische Form des elektronischen Geräts die erste physische Form ist; oder
wenn der eingeschlossene Winkel des ersten Bildschirms an der Faltstelle größer als der voreingestellte Winkel ist, Bestimmen, dass die physische Form des elektronischen Geräts die zweite physische Form ist.

4. Verfahren nach Anspruch 2 oder 3, wobei das Erhalten eines eingeschlossenen Winkels des ersten Bildschirms an einer Faltstelle durch das elektronische Gerät Folgendes umfasst:
Bestimmen eines Normalenvektors eines Bildschirms in dem ersten Bildschirm und eines Normalenvektors des anderen Bildschirms in dem ersten Bildschirm durch das elektronische Gerät;
Bestimmen eines eingeschlossenen Winkels zwischen dem Normalenvektor eines Bildschirms in dem ersten Bildschirm und des Normalenvektors des anderen Bildschirms in dem ersten Bildschirm durch das elektronische Gerät; und
Berechnen einer Differenz zwischen 180 Grad und dem eingeschlossenen Winkel zwischen dem Normalenvektor eines Bildschirms in dem ersten Bildschirm und dem Normalenvektor des anderen Bildschirms in dem ersten Bildschirm durch das elektronische Gerät, um den eingeschlossenen Winkel des ersten Bildschirms an der Faltstelle zu erhalten.

5. Verfahren nach Anspruch 3, wobei der voreingestellte Winkel 0 Grad beträgt.

6. Verfahren nach Anspruch 1, wobei das Bestimmen einer physischen Form des elektronischen Geräts durch das elektronische Gerät als Reaktion auf die Erkennung der Betätigung Folgendes umfasst:
Sammeln (S1001) von Sichtlinieninformationen eines Benutzers durch das elektronische Gerät; und
Bestimmen (S1002) der physischen Form des elektronischen Geräts durch das elektronische Gerät basierend auf den Sichtlinieninformationen des Benutzers.

7. Verfahren nach Anspruch 6, wobei das Bestimmen der physischen Form des elektronischen Geräts durch das elektronische Gerät basierend auf den Sichtlinieninformationen des Benutzers Folgendes umfasst:
wenn das elektronische Gerät feststellt, dass eine Sichtlinie des Benutzers auf den zweiten Bildschirm fällt, basierend auf den Sichtlinieninformationen des Benutzers, bestimmen, dass die physische Form des elektronischen Geräts die erste physische Form ist; oder
wenn das elektronische Gerät anhand der Sichtlinieninformationen des Benutzers feststellt, dass die Sichtlinie des Benutzers auf den ersten Bildschirm fällt, bestimmen, dass die physische Form des elektronischen Geräts die zweite physische Form ist.

8. Verfahren nach einem der Ansprüche 1 bis 7, wobei die Funktionstaste eine Bildschirmsperrtaste, eine Lautstärketaste oder eine Screenshot-Tastenkombination ist.

9. Elektronisches Gerät, wobei das elektronische Gerät einen ersten Bildschirm und einen zweiten Bildschirm umfasst, und der erste Bildschirm ein faltbarer Bildschirm ist, der zweite Bildschirm ein externer Bildschirm ist; und das elektronische Gerät ferner eine Funktionstaste und einen Prozessor umfasst, wobei
der Prozessor konfiguriert ist für:
das Erfassen einer Betätigung der Funktionstaste, wobei die Funktionstaste eine mechanische Taste ist, die seitlich an einem Rahmen des elektronischen Geräts angeordnet ist;
das Bestimmen einer physischen Form des elektronischen Geräts als Reaktion auf das Erkennen der Betätigung; und
das Steuern des ersten Bildschirms oder des zweiten Bildschirms basierend auf der Betätigung und der physischen Form des elektronischen Geräts;
wobei das Steuern des ersten Bildschirms oder des zweiten Bildschirms durch das elektronische Gerät basierend auf der Betätigung und der physischen Form des elektronischen Geräts Folgendes umfasst:
wenn die physische Form des elektronischen Geräts eine erste physische Form ist, Steuern des zweiten Bildschirms des elektronischen Geräts basierend auf der Betätigung, wobei die erste physische Form die gefaltete ist;
wenn die physische Form des elektronischen Geräts eine zweite physische Form ist, Steuern des ersten Bildschirms des elektronischen Geräts basierend auf der Betätigung, wobei die zweite physische Form die ungefaltete ist.

10. Elektronisches Gerät nach Anspruch 9, wobei der Prozessor insbesondere für Folgendes konfiguriert ist:
Erhalten eines eingeschlossenen Winkels des ersten Bildschirms an einer Faltstelle; und
Bestimmen der physischen Form des elektronischen Geräts basierend auf dem eingeschlossenen Winkel des ersten Bildschirms an der Faltstelle.

11. Elektronisches Gerät nach Anspruch 10, wobei der Prozessor insbesondere für Folgendes konfiguriert ist:
wenn der eingeschlossene Winkel des ersten Bildschirms an der Faltstelle kleiner oder gleich einem voreingestellten Winkel ist, Bestimmen, dass die physische Form des elektronischen Geräts die erste physische Form ist; oder
wenn der eingeschlossene Winkel des ersten Bildschirms an der Faltstelle größer als der voreingestellte Winkel ist, Bestimmen, dass die physische Form des elektronischen Geräts die zweite physische Form ist.

12. Elektronisches Gerät nach Anspruch 10 oder 11, wobei auf dem ersten Bildschirm und dem zweiten Bildschirm jeweils ein Gyroskopsensor konfiguriert ist, und
der Prozessor insbesondere für Folgendes konfiguriert ist:
Bestimmen eines Normalenvektors eines Bildschirms in dem ersten Bildschirm durch Verwendung eines Gyroskops auf dem ersten Bildschirm und eines Normalenvektors des anderen Bildschirms in dem ersten Bildschirm durch Verwendung eines Gyroskops auf dem ersten Bildschirm;
Bestimmen eines eingeschlossenen Winkels zwischen dem Normalenvektor eines Bildschirms in dem ersten Bildschirm und des Normalenvektors des anderen Bildschirms in dem ersten Bildschirm; und
Berechnen einer Differenz zwischen 180 Grad und dem eingeschlossenen Winkel zwischen dem Normalenvektor eines Bildschirms in dem ersten Bildschirm und dem Normalenvektor des anderen Bildschirms in dem ersten Bildschirm, um den eingeschlossenen Winkel des ersten Bildschirms an der Faltstelle zu erhalten.

13. Elektronisches Gerät nach Anspruch 11, wobei der voreingestellte Winkel 0 Grad beträgt.

14. Elektronisches Gerät nach Anspruch 9, wobei der Prozessor insbesondere für Folgendes konfiguriert ist:
Sammeln von Sichtlinieninformationen eines Benutzers, und
Bestimmen der physischen Form des elektronischen Geräts basierend auf den Sichtlinieninformationen des Benutzers.

15. Elektronisches Gerät nach Anspruch 14, wobei der Prozessor insbesondere für Folgendes konfiguriert ist:
wenn das elektronische Gerät anhand der Sichtlinieninformationen des Benutzers feststellt, dass eine Sichtlinie des Benutzers auf den zweiten Bildschirm fällt, bestimmen, dass die physische Form des elektronischen Geräts die erste physische Form ist; oder
wenn das elektronische Gerät anhand der Sichtlinieninformationen des Benutzers feststellt, dass die Sichtlinie des Benutzers auf den ersten Bildschirm fällt, bestimmen, dass die physische Form des elektronischen Geräts die zweite physische Form ist.

16. Elektronisches Gerät nach einem der Ansprüche 9 bis 15, wobei die Funktionstaste eine Bildschirmsperrtaste, eine Lautstärketaste oder eine Screenshot-Tastenkombination ist.

17. Computerlesbares Speichermedium, wobei das Computerspeichermedium Computeranweisungen speichert, die, wenn sie von einem Computer ausgeführt werden, den Computer veranlassen, das Bildschirmsteuerungsverfahren nach einem der Ansprüche 1 bis 8 durchzuführen.

## Revendications

1. Procédé de commande d'écran, dans lequel un dispositif électronique comprend un premier écran et un second écran, le premier écran est un écran pliable, le second écran est un écran externe, le dispositif électronique peut plier ou déplier le dispositif électronique à l'aide du premier écran, et le procédé comprend :
la détection (S401), par le dispositif électronique, d'une opération sur un bouton de fonction, dans lequel le bouton de fonction est un bouton mécanique agencé sur un côté latéral du dispositif électronique ;
la détermination (S402), par le dispositif électronique, d'une forme physique du dispositif électronique en réponse à la détection de l'opération ; et
la commande (S403), par le dispositif électronique, du premier écran ou du second écran sur la base de l'opération et de la forme physique du dispositif électronique ;
dans lequel la commande, par le dispositif électronique, du premier écran ou du second écran sur la base de l'opération et de la forme physique du dispositif électronique comprend :
si la forme physique du dispositif électronique est une première forme physique, la commande du second écran du dispositif électronique sur la base de l'opération, dans lequel la première forme physique est pliée ;
si la forme physique du dispositif électronique est une seconde forme physique, la commande du premier écran du dispositif électronique sur la base de l'opération, dans lequel la seconde forme physique est dépliée.

2. Procédé selon la revendication 1, dans lequel la détermination, par le dispositif électronique, d'une forme physique du dispositif électronique en réponse à la détection de l'opération comprend :
l'obtention (S601), par le dispositif électronique, d'un angle inclus du premier écran au niveau d'une position de pliage ; et
la détermination (S602), par le dispositif électronique, de la forme physique du dispositif électronique sur la base de l'angle inclus du premier écran au niveau de la position de pliage.

3. Procédé selon la revendication 2, dans lequel la détermination, par le dispositif électronique, de la forme physique du dispositif électronique sur la base de l'angle inclus du premier écran au niveau de la position de pliage comprend :
si l'angle inclus du premier écran au niveau de la position de pliage est inférieur ou égal à un angle prédéfini, la détermination que la forme physique du dispositif électronique est la première forme physique ; ou
si l'angle inclus du premier écran au niveau de la position de pliage est supérieur à l'angle prédéfini, la détermination que la forme physique du dispositif électronique est la seconde forme physique.

4. Procédé selon la revendication 2 ou 3, dans lequel l'obtention, par le dispositif électronique, d'un angle inclus du premier écran au niveau d'une position de pliage comprend :
la détermination, par le dispositif électronique, d'un vecteur normal d'un écran dans le premier écran et d'un vecteur normal de l'autre écran dans le premier écran ;
la détermination, par le dispositif électronique, d'un angle inclus entre le vecteur normal d'un écran dans le premier écran et le vecteur normal de l'autre écran dans le premier écran ; et
le calcul, par le dispositif électronique, d'une différence entre 180 degrés et l'angle inclus entre le vecteur normal d'un écran dans le premier écran et le vecteur normal de l'autre écran dans le premier écran, pour obtenir l'angle inclus du premier écran au niveau de la position de pliage.

5. Procédé selon la revendication 3, dans lequel l'angle prédéfini est de 0 degrés.

6. Procédé selon la revendication 1, dans lequel la détermination, par le dispositif électronique, d'une forme physique du dispositif électronique en réponse à la détection de l'opération comprend :
la collecte (S1001), par le dispositif électronique, d'informations de ligne de visée d'un utilisateur ; et
la détermination (S1002), par le dispositif électronique, de la forme physique du dispositif électronique sur la base des informations de ligne de visée de l'utilisateur.

7. Procédé selon la revendication 6, dans lequel la détermination, par le dispositif électronique, de la forme physique du dispositif électronique sur la base des informations de ligne de visée de l'utilisateur comprend :
si le dispositif électronique détermine qu'une ligne de visée de l'utilisateur tombe sur le second écran sur la base des informations de ligne de visée de l'utilisateur, la détermination que la forme physique du dispositif électronique est la première forme physique ; ou
si le dispositif électronique détermine que la ligne de visée de l'utilisateur tombe sur le premier écran sur la base des informations de ligne de visée de l'utilisateur, la détermination que la forme physique du dispositif électronique est la seconde forme physique.

8. Procédé selon l'une quelconque des revendications 1 à 7, dans lequel le bouton de fonction est un bouton de verrouillage d'écran, un bouton de volume ou une combinaison de boutons de capture d'écran.

9. Dispositif électronique, dans lequel le dispositif électronique comprend un premier écran et un second écran, et le premier écran est un écran pliable, le second écran est un écran externe ; et le dispositif électronique comprend en outre un bouton de fonction et un processeur, dans lequel
le processeur est configuré pour :
détecter une opération sur le bouton de fonction, dans lequel le bouton de fonction est un bouton mécanique agencé sur un cadre latéral du dispositif électronique ;
déterminer une forme physique du dispositif électronique en réponse à la détection de l'opération ; et
commander le premier écran ou le second écran sur la base de l'opération et de la forme physique du dispositif électronique ;
dans lequel la commande, par le dispositif électronique, du premier écran ou du second écran sur la base de l'opération et de la forme physique du dispositif électronique comprend :
si la forme physique du dispositif électronique est une première forme physique, la commande du second écran du dispositif électronique sur la base de l'opération, dans lequel la première forme physique est pliée ;
si la forme physique du dispositif électronique est une seconde forme physique, la commande du premier écran du dispositif électronique sur la base de l'opération, dans lequel la seconde forme physique est dépliée.

10. Dispositif électronique selon la revendication 9, dans lequel le processeur est configuré spécifiquement pour :
obtenir un angle inclus du premier écran au niveau d'une position de pliage ; et
déterminer la forme physique du dispositif électronique sur la base de l'angle inclus du premier écran au niveau de la position de pliage.

11. Dispositif électronique selon la revendication 10, dans lequel le processeur est configuré spécifiquement pour :
si l'angle inclus du premier écran au niveau de la position de pliage est inférieur ou égal à un angle prédéfini, déterminer que la forme physique du dispositif électronique est la première forme physique ; ou
si l'angle inclus du premier écran au niveau de la position de pliage est supérieur à l'angle prédéfini, déterminer que la forme physique du dispositif électronique est la seconde forme physique.

12. Dispositif électronique selon la revendication 10 ou 11, dans lequel un capteur gyroscopique est configuré sur chacun du premier écran et du second écran ; et
le processeur est configuré spécifiquement pour :
déterminer un vecteur normal d'un écran dans le premier écran à l'aide du capteur gyroscopique sur le premier écran, et déterminer un vecteur normal de l'autre écran dans le premier écran à l'aide du capteur gyroscopique sur le premier écran ;
déterminer un angle inclus entre le vecteur normal d'un écran dans le premier écran et le vecteur normal de l'autre écran dans le premier écran ; et
calculer une différence entre 180 degrés et l'angle inclus entre le vecteur normal d'un écran dans le premier écran et le vecteur normal de l'autre écran dans le premier écran, pour obtenir l'angle inclus du premier écran au niveau de la position de pliage.

13. Dispositif électronique selon la revendication 11, dans lequel l'angle prédéfini est de 0 degrés.

14. Dispositif électronique selon la revendication 9, dans lequel le processeur est configuré spécifiquement pour :
collecter des informations de ligne de visée d'un utilisateur ; et déterminer la forme physique du dispositif électronique sur la base des informations de ligne de visée de l'utilisateur.

15. Dispositif électronique selon la revendication 14, dans lequel le processeur est configuré spécifiquement pour :
si le dispositif électronique détermine qu'une ligne de visée de l'utilisateur tombe sur le second écran sur la base des informations de ligne de visée de l'utilisateur, déterminer que la forme physique du dispositif électronique est la première forme physique ; ou
si le dispositif électronique détermine que la ligne de visée de l'utilisateur tombe sur le premier écran sur la base des informations de ligne de visée de l'utilisateur, déterminer que la forme physique du dispositif électronique est la seconde forme physique.

16. Dispositif électronique selon l'une quelconque des revendications 9 à 15, dans lequel le bouton de fonction est un bouton de verrouillage d'écran, un bouton de volume ou une combinaison de boutons de capture d'écran.

17. Support de stockage informatique, dans lequel le support de stockage informatique stocke des instructions informatiques qui, lorsqu'elles sont exécutées par un ordinateur, amènent l'ordinateur à mettre en œuvre le procédé selon l'une quelconque des revendications 1 à 8.
